# EUROPEAN PATENT APPLICATION

(11) **EP 2 781 313 A2**
(43) Date of publication of application: **24.09.2014**
(21) Application number: 14151128.7
(22) Date of filing: 14.01.2014
(51) Int. Cl.: B25J 9/16

(54) **Robot system, control apparatus and method of manufacturing work piece**

(30) Priority: 18.03.2013 JP 2013055373
(71) Applicant: Kabushiki Kaisha Yaskawa Denki, Kitakyushu-shi, Fukuoka 806-0004 (JP)
(72) Inventor: Matsuo, Tomohiro, Kitakyushu-shi, Fukuoka 806-0004 (JP); Ishikawa, Shinichi, Kitakyushu-shi, Fukuoka 806-0004 (JP); Kawano, Tomoki, Kitakyushu-shi, Fukuoka 806-0004 (JP)
(74) Representative: Viering, Jentschura & Partner Patent- und Rechtsanwälte

(57) **Abstract**

A control apparatus (10) generally performs a control such that a robot (20) picks up components (31-35) from a component loading tray (30) in order according to an assembling sequence and assembles the components. Meanwhile, when the robot (20) fails to pick up the components according to the assembling sequence, the control apparatus (10) controls the operation of the robot (20) such that the robot (20) first picks up a component having a high picking-up possibility and first assembles the corresponding picked-up components according to the assembling sequence between the corresponding picked-up components. Thereafter, the control apparatus (10) changes a picking-up condition and controls the operation of the robot (20) such that the robot (20) picks up the components before assembling based on the changed picking-up condition and assembles the components.

## Description

### BACKGROUND

### 1. Field

The present disclosure relates to a robot system, a control apparatus, and a method of manufacturing a work piece.

### 2. Description of the Related Art

In recent manufacturing lines, for example, as disclosed in Japanese Patent Laid-Open Publication No. 2010-188459, a component kit made by collecting various kinds of component sets (referred to as "mixed component") needed for assembling a product, on a component tray, are formed, and the corresponding formed component kit is supplied to a robot for performing an assembling operation. In a manufacturing method using the component kit, the assembling operation is performed by picking up components in the component kit according to a predetermined assembling sequence.

### SUMMARY

However, in the case of failing in picking up a component in a turn of the assembling sequence, it is usual that the assembling process does not proceed to the next step without the component which the robot 20 fails to pick up. As a result, the robot 20 tries to pick up the component until successfully picking up the component. Accordingly, work time is unnecessarily lengthened, and when a long time is spent until the robot 20 succeeds in picking up the component, work efficiency deteriorates.

The present disclosure has been accomplished in view of the above and it is an object of the present disclosure to provide a robot system, a control apparatus, and a method of manufacturing a work piece which can improve the work efficiency of the assembling operation.

In order to solve the problem, an aspect of the present disclosure is to provide a robot system including: a component loading portion where plurality of kinds of components needed for assembling a product are loaded; a robot configured to pick up the components from the component loading portion and assemble the picked-up components; and a control apparatus configured to control an operation of the robot, wherein the control apparatus includes a first storage unit configured to store information indicating a predetermined assembling sequence when the components are assembled, and controls the operation of the robot such that the robot picks up the components from the component loading portion in order according to the assembling sequence and assembles the components, and when the robot fails to pick up the component according to the assembling sequence, the control apparatus controls the operation of the robot such that the robot first picks up the component having a high picking-up possibility and first assembles corresponding picked-up component according to the assembling sequence between the picked-up components, and changes a picking-up condition and controls the operation of the robot such that the robot picks up the components before assembling based on the changed picking-up condition and assembles the components.

According to this disclosure, a robot system, a control apparatus, and a method of manufacturing a work piece which can improve the work efficiency of the assembling operation may be provided.

### BRIEF DESCRIPTION OF THE DRAWINGS

Fig. 1 illustrates a configuration of a robot system 1;
Fig. 2 illustrates a physical position relation between components of the robot system 1;
Fig. 3 illustrates an example of a component loading tray 30 and components 31 to 35;
Fig. 4 illustrates a completed product made by using components 31 to 35;
Fig. 5 illustrates a hardware configuration of a control apparatus 10;
Figs. 6A and 6B are views for describing a determining operation of an assembling completion determination unit 135;
Figs. 7A and 7B are views for describing a determining operation of an assembling completion determination unit 135; and
Figs. 8A and 8B are views for describing a determining operation of an assembling completion determination unit 135.

### DETAILED DESCRIPTION

Hereinafter, embodiments of a robot system, a control apparatus, and a method of manufacturing a work piece will be described in detail with reference to the accompanying drawings. Further, in the description of the drawings, the same elements will be designated by the same reference numerals and a duplicate description thereof will be omitted. Further, the drawings and the related description, which will be described below, are provided for illustrative purposes to describe a robot system, a control apparatus, and a method of manufacturing a work piece, and do not limit the scope of the present invention. Further, dimensions, etc of illustrated parts may be different from actual dimensions of a robot system, a control apparatus, and a method of manufacturing a work piece.

### (an overall configuration of a robot system 1)

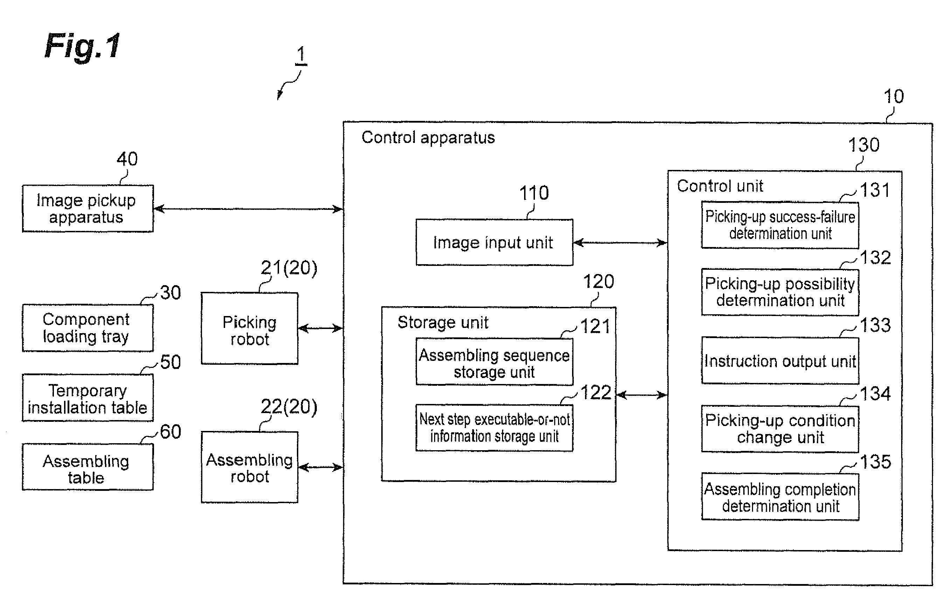

First, an overall configuration of the robot system 1 will be described. Fig. 1 illustrates a configuration of a robot system 1. As illustrated in Fig. 1, the robot system 1 includes a control apparatus 10, a picking robot 21, an assembling robot 22, a component loading tray 30 (component loading portion), an image pickup apparatus 40, a temporary installation table 50, and an assembling table 60. The control apparatus 10, the picking robot 21, the assembling robot 22, and the image pickup apparatus 40 are connected to each other to transmit/receive information to/from each other by a communication network.

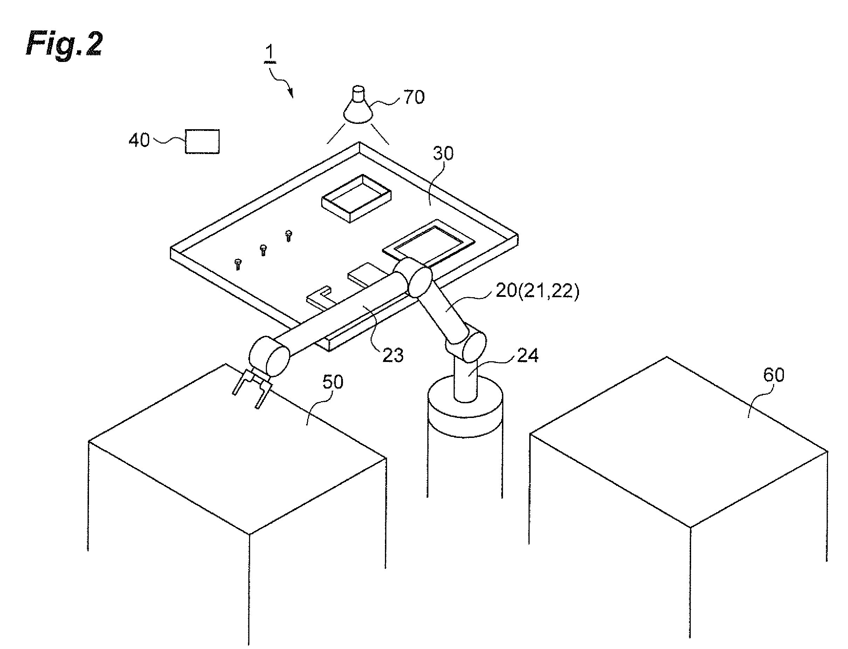

Fig. 2 illustrates a physical position relation between the picking robot 21, the assembling robot 22, the component loading tray 30, the image pickup apparatus 40, the temporary installation table 50, and the assembling table 60. As an example illustrated in Fig. 2, the component loading tray 30, the temporary installation table 50, and the assembling table 60 are arranged in a form of enclosing the picking robot 21 and the assembling robot 22 which are disposed at a center. The arrangement example is not limited thereto. As long as an arm 23 of the picking robot 21 can arrive at the component loading tray 30, the temporary installation table 50, and the assembling table 60, an arm 23 of the assembling robot 22 can arrive at the temporary installation table 50 and the assembling table 60, and the image pickup apparatus 40 can pick up an image of the component loading tray 30, various variations may be applied. Further, although an example where the picking robot 21 and the assembling robot 22 are configured as one robot 20 is described in the arrangement of Fig. 2, the present disclosure is not limited thereto, and the picking robot 21 and the assembling robot 22 may be configured as separate robots.

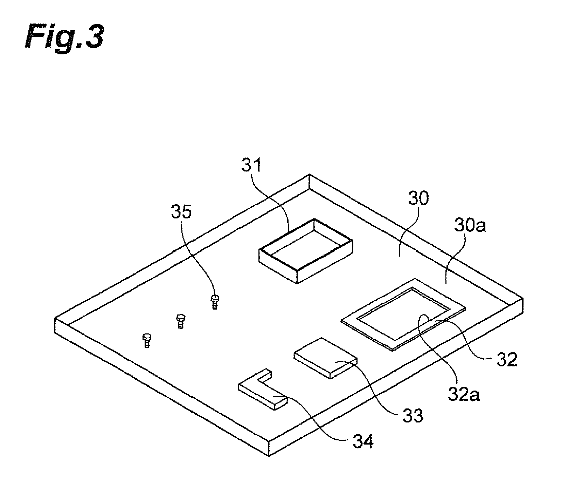

In the component loading tray 30, various kinds of components needed for assembling a product, that is, mixed components are loaded. Fig. 3 illustrates an example of a component loading tray 30 and components 31 to 35. The component loading tray 30 is made of, for example, a metal, resin, or the like, and has a space 30a where components 31 to 35 are loaded. A thing for loading the mixed components is not limited thereto, has only to load the mixed components, and may have, for example, a form of a box. Otherwise, the thing may be a specific place (specific place such as a bottom surface of a workplace) for loading the mixed components.

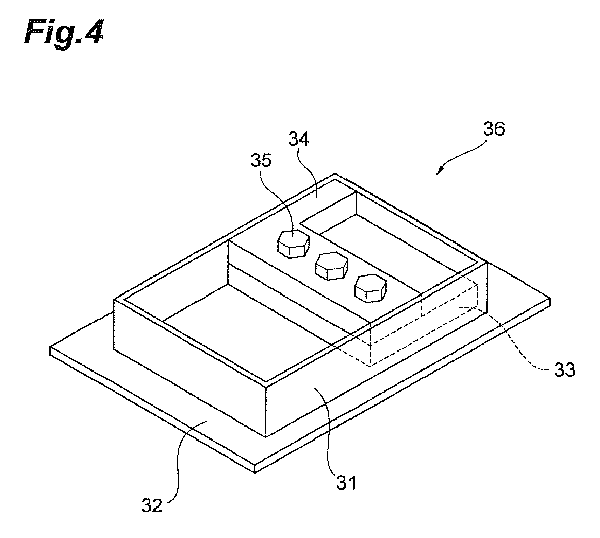

When a predetermined assembling is performed by using the components 31 to 35 illustrated in Fig. 3, a product 36 is completed as illustrated in Fig. 4. Fig. 4 illustrates a completed product made by using components 31 to 35 illustrated in Fig. 3. A predetermined assembling sequence for assembling the components 31 to 35 is set. For example, in an example of Fig. 3, the assembling sequence is set to assemble the components 31 to 35 in the order of components 31, 32, 33, 34, and 35. Hereinafter, the description will be conducted using this assembling sequence as an example. An assembling sequence storage unit 121 of the control apparatus 10 stores information indicating this assembling sequence, as described below.

The image pickup apparatus 40 picks up an image of the component loading tray 30. The image pickup apparatus 40 has only to pick up an image of an object, and may be configured by, for example, a CCD camera, a stereo camera, a distance image sensor, or a combination of them.

The temporary installation table 50 and the assembling table 60 correspond to general working tables in manufacturing lines. The temporary installation table 50 is a table for temporarily loading a component picked up by the picking robot 21. The assembling table 60 is a table in which the assembling robot 22 performs an assembling operation by using the component picked up by the picking robot 21.

In the robot system 1 having a configuration illustrated in Figs. 1 and 2, the picking robot 21 picks up the components 31 to 35 loaded on the component loading tray 30. When the picking-up operation has no error and is successfully performed as usual, the picking robot 21 places the corresponding picked-up component on the assembling table 60. Meanwhile, when the picking-up operation has an error(s) and is performed in a sequence different from a general assembling sequence as described below, the picking robot 21 places the corresponding picked-up component on the temporary installation table 50. Further, the assembling robot 22 manufactures a desired product by using components loaded on the assembling table 60 and the temporary installation table 50. Further, hereinafter, the description will be conducted using an example where the picking robot 21 and the assembling robot 22 are configured as one robot 20 as illustrated in Fig. 2. That is, the robot 20 can perform both of a picking-up operation and an assembling operation.

### (the control apparatus 10)

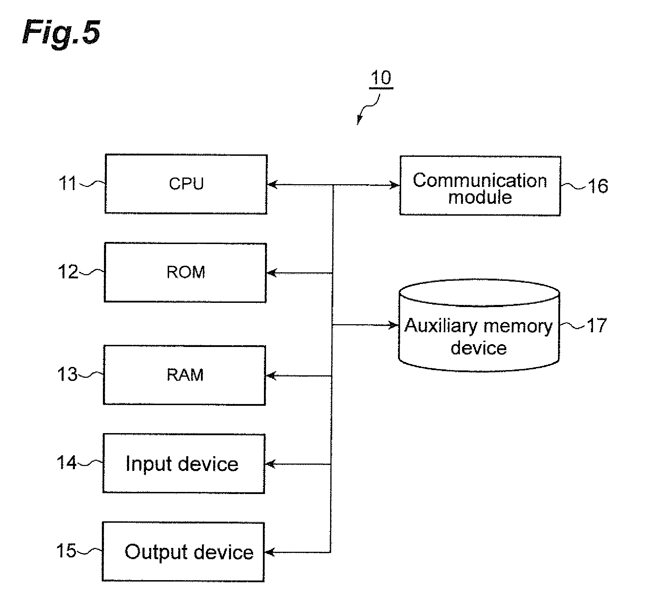

Next, the control apparatus 10 will be described. The control apparatus 10 controls an operation of the robot 20. Fig. 5 illustrates a hardware configuration of a control apparatus 10. As shown in Fig. 5, the control apparatus 10 is physically configured as a general computer system including a Central Processing Unit (CPU) 11, main memory units such as a Read Only Memory (ROM) 12 and a Random Access Memory (RAM) 13, input devices 14 such as a keyboard and a mouse, output devices 15 such as a display, a communication module 16, such as a network card, configured to transmit and receive data between the robot 20 and the image pickup apparatus 40, and an auxiliary memory unit 17 such as a hard drive disk (HDD). Functions of the control apparatus 10 being described below are implemented by reading predetermined computer software in hardware such as the CPU 11, the ROM 12, and the RAM 13 to operate the input device 14, the output device 15, and the communication module 16 under the control of the CPU 11 simultaneously while performing reading and recording of data in the main memory units 12 and 13 and the auxiliary memory unit 17.

As illustrated in Fig. 1, the control apparatus 10 functionally includes an image input unit 110, a storage unit 120, and a control unit 130. The image input unit 110 inputs data of an image of the component loading tray 30 picked up by the image pickup apparatus 40.

The storage unit 120 stores data needed for performing various controls of the control apparatus 10, and includes an assembling sequence storage unit 121 (first storage unit) and a next step executable-or-not information storage unit 122 (second storage unit). The assembling sequence storage unit 121 stores information indicating a predetermined assembling sequence when the components 31 to 35 are assembled. As described above, a predetermined assembling sequence for assembling is set for each of the components 31 to 35, and the assembling sequence storage unit 121 stores the information indicating the predetermined assembling sequence. In the above example, the assembling sequence storage unit 121 stores information indicating an assembling sequence in the order of components 31, 32, 33, 34, and 35.

The assembling sequence storage unit 121 stores information indicating an assembling sequence (hereinafter, referred to as "sequence for a part of components") for a part of components on the component loading tray 30 as well as information indicating an assembling sequence (hereinafter, referred to as "sequence for all components") for all components on the component loading tray 30. For example, for the components 33, 34, and 35, the storage unit 120 stores information indicating an assembling sequence in the order of components 33, 34, and 35. Although a sequence for all components with respect to the components 33, 34, and 35 and a sequence for a part of components with respect to the components 33, 34, and 35 coincide with each other in this example, they are not limited thereto, and they may not coincide with each other. That is, for example, a sequence for a part of components may be in the order of the components 34, 33, and 35 according to a kind of a completed product or a condition of an assembling operation.

The next step executable-or-not information storage unit 122 stores information indicating whether an assembling process can proceed to a next step in an assembling sequence for each component. "Whether an assembling process can proceed to a next step in an assembling sequence" implies whether it is possible to partially start assembling of a corresponding component, which has been picked up, even when a component in a prior turn in an assembling sequence has not been picked up.

For example, in the case of the components 31 to 35 illustrated in Fig. 3, it is assumed that, in an example of the assembling method, the component 31 is first inserted into an opening 32a of the component 32, and the component 33 is then loaded on the component 31. Thereafter, the component 34 is loaded on the component 33, and the component 35 is then mounted to a predetermined position of the component 34. In this case, the picking-up sequence is in the order of components 31, 32, 33, 34, and 35. However, in a case where the component 31 is not picked up due to an error, when the component 33 can be picked up, it is possible that the components 34 and 35, which are components subsequent to the component 33, are picked up and the component 34 is loaded on the component 33, and the component 35 is then mounted to a predetermined position of the component 34. That is, even when the components 31 and 32 are not picked up, the assembling sequence can partially start from a step of the component 33. In this case, the component 33 corresponds to "a component enabling the assembling process to proceed to a next step", and the next step executable-or-not information storage unit 122 stores information indicating this purpose.

Meanwhile, in a case of the component 32, when the component 31 is not picked up, the assembling process cannot proceed to a next step. This is because, in a case where the component 31 is not picked up, even when the component 32 is picked up and the component 33 is then picked up, there is no assembling operation to be directly performed between the components 32 and 33. In this case, the component 32 corresponds to "a component disabling the assembling process to proceed to a next step", and the next step executable-or-not information storage unit 122 stores information indicating this purpose.

The control unit 130 receives various inputs from the image input unit 110 and the storage unit 120, and serves to control an operation of the robot 20 based on the corresponding inputs. The control unit 130 generally performs a control such that the robot 20 picks up the components 31 to 35 from the component loading tray 30 in order according to a predetermined assembling sequence and assembles the components. Meanwhile, when the robot 20 fails to pick up one of the components according to the predetermined assembling sequence, the control unit 130 controls the operation of the robot 20 such that the robot 20 first picks up a component having a high picking-up possibility and enabling the assembling process to proceed to a next step, and first assembles the corresponding picked-up component according to the assembling sequence between the corresponding picked-up components. Thereafter, the control unit 130 changes a picking-up condition, and controls the operation of the robot 20 such that the robot 20 picks up components before assembling based on the changed picking-up condition to assemble the components.

In order to implement the above operations, the control unit 130 functionally includes a picking-up success-failure determination unit 131, a picking-up possibility determination unit 132, an instruction output unit 133, a picking-up condition change unit 134, and an assembling completion determination unit 135.

The picking-up success-failure determination unit 131 determines whether the robot 20 succeeds to pick up a component. The picking-up success-failure determination unit 131 can perform this determination based on, for example, information received from a sensor 24 (See Fig. 2) disposed at the arm 23 of the robot 20. Further, the picking-up success-failure determination unit 131 can perform this determination by comparing an image of the component loading tray 30 before the robot 20 starts picking-up of the component with an image of the component loading tray 30 after the robot 20 completes picking-up of the component. In this case, the image pickup apparatus 40 picks up both the images needed for the determination operation, and outputs the images to the picking-up success-failure determination unit 131 via the image input unit 110. The picking-up success-failure determination unit 131 outputs information indicating the determination result to the instruction output unit 133.

When the robot 20 fails to pick up one of the components according to the predetermined assembling sequence, the picking-up possibility determination unit 132 determines a possibility of success in picking up a component in a next turn in the corresponding assembling sequence. The possibility of success in picking up the component is determined based on, for example, a shape, a posture, a position, and the like of the corresponding component. When scores of each of the shape, the posture, the position, and the like of the corresponding component are calculated and the total score exceeds a predetermined threshold value, the picking-up possibility determination unit 132 determines that the corresponding component has a high possibility of success in being picked up. The picking-up possibility determination unit 132 outputs information indicating the determination result to the instruction output unit 133.

The instruction output unit 133 generates an instruction for picking up and assembling components and outputs the instruction to the robot 20. The robot 20 picks up and assembles the component designated by the instruction from the instruction output unit 133. A driving unit (not shown) for driving the robot 20 based on the instruction from the instruction output unit 133 may be separately provided. In general, the instruction output unit 133 generates a picking-up instruction and outputs the instruction to the robot 20, such that the robot 20 picks up all of components on the component loading tray 30 in order according to the predetermined assembling sequence. As an example of Fig. 3, the instruction output unit 133 generates a picking-up instruction and an assembling instruction and outputs the instructions to robot 20, such that the robot 20 picks up the components 31 to 35 and places the components 31 to 35 on the assembling table 60 in the order of components 31, 32, 33, 34, and 35 and assembles the picked-up components on the assembling table 60.

Meanwhile, when receiving, from the picking-up success-failure determination unit 131, information indicating the reason of failure of the robot 20 in picking up one of the components, the instruction output unit 133 generates a picking-up instruction and outputs the instruction to the robot 20, such that the robot 20 first picks up a component having a high picking-up possibility and enabling the assembling process to proceed to a next step, and loads the picked-up component on the temporary installation table 50. Herein, the determination on which component has a high picking-up possibility is performed based on an output signal from the picking-up possibility determination unit 132. Further, the determination on whether the corresponding component is a component enabling the assembling process to proceed to a next step is performed with reference to the next step executable-or-not information storage unit 122. Further, the instruction output unit 133 generates an assembling instruction and outputs the instruction to first assemble picked-up components loaded on the temporary installation table 50 according to an assembling sequence between the corresponding picked-up components.

In an example of Fig. 3, it is assumed that, the instruction output unit 133 receives, from the picking-up success-failure determination unit 131, information indicating the reason of failure of the robot 20 in picking up the component 31. In this case, the picking-up possibility determination unit 132 determines the possibility of success in picking up the components 32, 33, 34, and 35 which are in the following turns in the assembling sequence. In this determination, it is assumed that, for example, it is determined that the component 33 has a low picking-up possibility and the components 32, 34, and 35 have high picking-up possibilities. In this case, the instruction output unit 133 generates a picking-up instruction and outputs the instruction to the robot 20 such that the robot 20 first picks up one of the components 32, 34, and 35 having high picking-up possibilities. Since it is determined that the component 33 has a low picking-up possibility, the instruction output unit 133 does not generate a picking-up instruction for first picking up the component 33.

However, the instruction output unit 133 does not generate a picking-up instruction for first picking up the component 32. This is because it is determined that the component 32 corresponds to a component disabling the assembling process to proceed to a next step. The instruction output unit 133 can perform this determination with reference to the next step executable-or-not information storage unit 122.

Further, the instruction output unit 133 generates an assembling instruction and outputs the instruction to robot 20 such that the robot 20 first assembles the corresponding picked-up components 34 and 35 according to the assembling sequence between the components 34 and 35 which are the corresponding picked-up components. Further, the instruction output unit 133 can acquire information indicating the assembling sequence (sequence for a part of components) between the components 34 and 35 with reference to the assembling sequence storage unit 121. Meanwhile, since the component 32 has a high picking-up possibility, the instruction output unit 133 may generate a picking-up instruction for first picking up the component 3 2 and loading the component 32 on another temporary installation table (not shown).

The picking-up condition change unit 134 changes a picking-up condition of the robot 20. When the robot 20 fails to pick up one of the components according to a predetermined assembling sequence, the picking-up condition change unit 134 changes the picking-up condition after the component in a next step is first picked up as described above. After the picking-up condition is changed by the picking-up condition change unit 134, the instruction output unit 133 generates a picking-up instruction and an assembling instruction and outputs the instructions to the robot 20 such that the robot 20 picks up components before assembling based on the changed picking-up condition to assemble the component. In the above example, after the picking-up condition is changed, the instruction output unit 133 generates a picking-up instruction and an assembling instruction and outputs the instructions to the robot 20 such that the robot 20 picks up the components 31 to 33 based on the changed picking-up condition to assemble the components 31 to 33. The instruction output unit 133 may generate a picking-up instruction and an assembling instruction such that the robot 20 moves the corresponding picked-up components 31 to 33 to the assembling table 60 and assembles the components 31 to 33 with the components 34 and 35 which are previously assembled at the temporary installation table 50.

As a method of changing the picking-up condition, the picking-up condition change unit 134 may change a lighting 70 (See Fig. 2) for lighting the components. The picking-up condition change unit 134 may change the picking-up condition by, for example, adjusting brightness and a direction of the lighting 70. Further, the picking-up condition may be changed by, for example, changing light emitted by the lighting 70 from visible rays to infrared rays.

As another method of changing the picking-up condition, the picking-up condition change unit 134 may change an initial position of the robot 20 for picking up the components. In this case, the picking-up condition change unit 134 may change the picking-up condition by outputting, to the robot 20, an instruction having a purpose for changing the initial position to another predetermined position.

As yet another method of changing the picking-up condition, the picking-up condition change unit 134 may shuffle components remaining in the component loading tray 30 once. In this case, another robot for the shuffling may be additionally provided, or the robot 20 may perform the shuffling. Otherwise, the picking-up condition change unit 134 outputs an alarm for the shuffling, and an operator may perform the shuffling.

The assembling completion determination unit 135 determines whether the assembling by the robot 20 is completed. As a method of determining the assembling completion, the assembling completion determination unit 135 compares an image of the component loading tray 30 before components are loaded on the component loading tray 30 with an image of the component loading tray 30 picked up at a time point when the corresponding determination is performed, and when a coincidence degree of the two images is larger than or equal to a predetermined threshold value, the assembling completion determination unit 135 may determine that the assembling is completed.

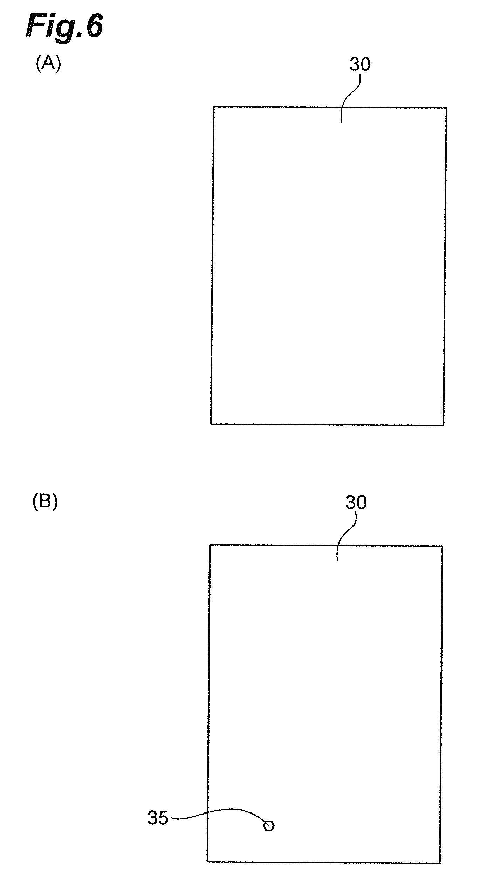

Figs. 6A and 6B are views for describing a determining operation of an assembling completion determination unit 135. Fig. 6A is a view obtained by picking up an image of the component loading tray 30 before the components are loaded on the component loading tray 30. This image may be obtained by allowing the image pickup apparatus 40 to pick up the component loading tray 30 before the components are loaded on the component loading tray 30, and the image pickup apparatus 40 inputs the corresponding picked-up image to the image input unit 110. Meanwhile, Fig. 6B is a view obtained by picking up an image of the component loading tray 30 at a time point when the determination of the assembling completion determination unit 135 is performed. This image may be obtained by picking up the component loading tray 30 by the image pickup apparatus 40 at a time point when the determination of the assembling completion determination unit 135 is performed, and the image pickup apparatus 40 inputs the corresponding picked-up image to the image input unit 110. The assembling completion determination unit 135 compares the image illustrated in Fig. 6A with the image illustrated in Fig. 6B. In this example, since a part of the component 35 remains in Fig. 6B, a coincidence degree of the two images is not larger than or equal to a predetermined threshold value, and the assembling completion determination unit 135 determines that the assembling is not completed.

As another method of determining the assembling completion, a predetermined mark is decorated at each of positions where the components are loaded on the component loading tray 30, and when the marks corresponding to each of the components are perceived to be more than or equal to a predetermined threshold value from the image of the component loading tray 30 picked-up at a time point when the corresponding determination is performed, the assembling completion determination unit 135 may determine that the assembling is completed.

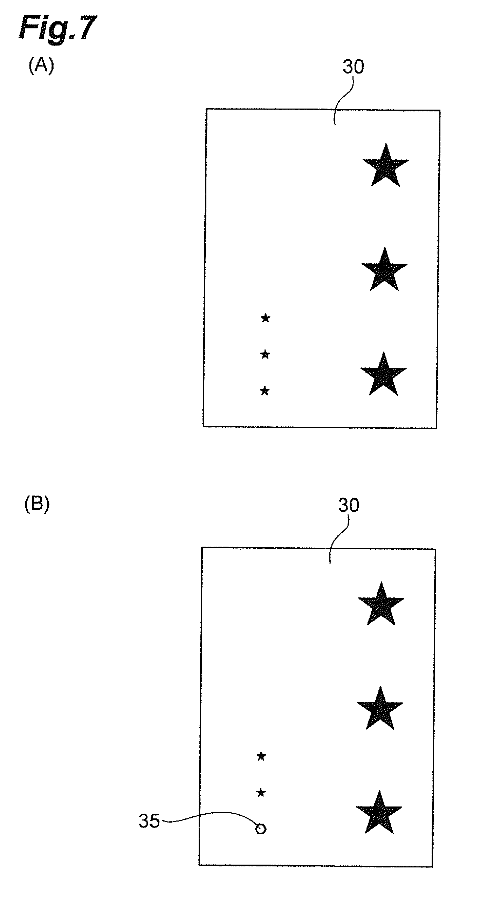

Figs. 7A and 7B are views for describing a determining operation of an assembling completion determination unit 135. Fig. 7A is a view obtained by picking up an image of the component loading tray 30 before the components are loaded on the component loading tray 30. As illustrated in Fig. 7A, a predetermined mark (in this example, a star-shaped mark) is decorated at each of positions in the component loading tray 30 where the components 31 to 35 are loaded. Meanwhile, Fig. 7B is a view obtained by picking up an image of the component loading tray 30 at a time point when the determination of the assembling completion determination unit 135 is performed. When the marks corresponding to each of the components are perceived to be more than or equal to a predetermined threshold value from the image of Fig. 7B, the assembling completion determination unit 135 determines that the assembling is completed. In this example, for example, when all of the marks (in this example, the number of marks is 6) are perceived, the assembling completion determination unit 135 determines that the assembling is completed. That is, since only 5 marks are perceived in an example of Fig. 7B, the assembling completion determination unit 135 determines that the assembling is not completed.

As yet another method of determining the assembling completion, a place where the components of the component loading tray 30 are loaded is formed in grid patterns, and when the grid patterns are perceived to be more than or equal to a predetermined threshold value from the image of the component loading tray 30 picked up at a time point when the corresponding determination is performed, the assembling completion determination unit 135 may determine that the assembling is completed.

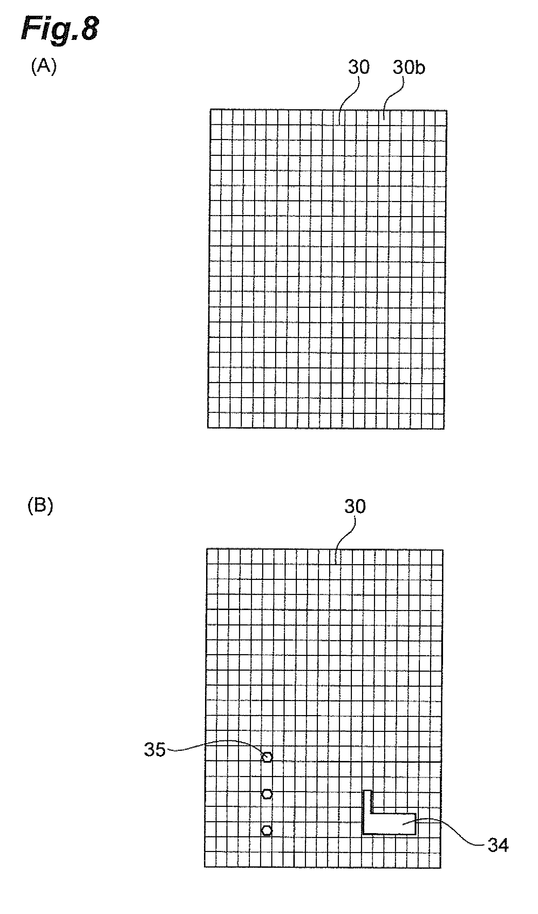

Figs. 8A and 8B are views for describing a determining operation of an assembling completion determination unit. Fig. 8A is a view obtained by picking up an image of the component loading tray 30 before the components are loaded on the component loading tray 30. As illustrated in Fig. 8A, the place (principal surface 30b) of the component loading tray 30 where the components are loaded is formed in grid patterns. Meanwhile, Fig. 8B is a view obtained by picking up an image of the component loading tray 30 at a time point when the determination of the assembling completion determination unit 135 is performed. When the grid patterns are perceived to be more than or equal to a predetermined threshold value from the image of Fig. 8B, the assembling completion determination unit 135 determines that the assembling is completed. In this example, when for example all of the grid patterns are perceived, the assembling completion determination unit 135 determines that the assembling is completed. That is, since several grid patterns hidden below the components 34 and 35 cannot be perceived in an example of Fig. 8B, the assembling completion determination unit 135 determines that the assembling is not completed.

Hereinabove, although the robot system 1 according to the present embodiment has been described, a desired product (work piece) can be manufactured by using the robot system 1. The work piece corresponds to all products using a work receiving processing such as carrying or assembling by the robot system 1, or the work itself For example, the work piece includes components such as a bolt or assemblies such as a vehicle.

Next, an operation and an effect of the robot system 1 according to the present embodiment will be described. In accordance with the robot system 1 according to the present embodiment, the control apparatus 10 generally performs a control such that the robot 20 picks up components from the component loading tray 30 in order according to an assembling sequence and assembles the components. Meanwhile, when the robot 20 fails to pick up one of the components according to the predetermined assembling sequence, the control apparatus 10 controls the operation of the robot 20 such that the robot first picks up a component which has a high picking-up possibility, and first assembles the corresponding picked-up components according to the assembling sequence between the corresponding picked-up components. Thereafter, the control apparatus 10 changes a picking-up condition, and controls the operation of the robot 20 such that the robot 20 picks up components before assembling based on the changed picking-up condition to assembles the components,.

By the control described above, when the robot fails to pick up a specific component, it is possible to prevent repeated picking up of the corresponding component until the corresponding component is successfully picked up. As a result, it is possible to prevent deterioration of work efficiency by unnecessary lengthening of a work time, which may be caused by repeated trying of picking up the components having a low picking-up possibility Further, since the control apparatus 10 controls to first pick up the components having a high picking-up possibility, it is possible to clearly prevent repeated trying of picking up the components having a low picking-up possibility. Further, since the control apparatus 10 changes the picking-up condition and controls to retry to pick up the components, it is possible to prevent repeated trying of picking up the components in a low picking-up possibility state.

Further, in accordance with the present embodiment, there is provided a detailed method of changing the picking-up condition. That is, it is possible to seek a possibility to improve a picking-up success rate when the robot 20 retries to pick up the component, by changing brightness or the like of the lighting 70. Further, it is possible to seek a possibility to improve a picking-up success rate when retrying picking-up, by changing the initial position of the robot 20 for picking up the components. Furthermore, it is possible to seek a possibility to improve a picking-up success rate when the robot 20 retries to pick up the component, by shuffling the components remaining in the component loading tray 30 once.

Further, in accordance with the present embodiment, when the robot 20 fails to pick up one of the components according to the predetermined assembling sequence, the control apparatus 10 controls the operation of the robot 20 such that the robot 20 first picks up a component having a high picking-up possibility and enabling the assembling process to proceed to a next step. The component enabling the assembling process to proceed to a next step is first picked up and the assembling operation of the component is first performed, so as to further improve the work efficiency.

Further, in accordance with the present embodiment, there is provided a detailed method of determining whether the assembling by the robot 20 is completed. That is, the assembling completion determination unit 135 compares an image of the component loading tray 30 before the components are loaded on the component loading tray 30 with an image of the component loading tray 30 picked up at a time point when the corresponding determination is performed, and then when a coincidence degree of the two images is larger than or equal to a predetermined threshold value, the assembling completion determination unit 135 may determine that the assembling is completed. By this method, the determination of the assembling completion is promptly performed by using a simple configuration.

Further, a predetermined mark is decorated at each of positions where the components are loaded on the component loading tray 30, and when the marks corresponding to each of the components are perceived to be more than or equal to a predetermined threshold value from the image of the component loading tray 30 picked up at a time point when the corresponding determination is performed, the assembling completion determination unit 135 may determine that the assembling is completed. By this method, for example, since it is possible to prevent misperception of a flaw on the component loading tray 30 as a component, the determination of the assembling completion may be correctly performed.

Further, a place where the components of the component loading tray 30 are loaded is formed in grid patterns, and when the grid patterns are perceived to be more than or equal to a predetermined threshold value from the image of the component loading tray 30 picked up at a time point when the corresponding determination is performed, the assembling completion determination unit 135 may determine that the assembling is completed. By this method, the determination of the assembling completion may be correctly performed while the apparatus is simply configured.

Hereinabove, although the embodiments of the present invention have been described, the present invention is not limited thereto.

For example, the robot 20 according to the above embodiments is not limited to a single arm type robot illustrated in Fig. 1, and may be a double arm type robot. Further, the robot 20 may be a vertical multiple joint type robot, a horizontal multiple joint type robot, or a parallel link type robot. Further, the arm portion of the robot 20 may have a form of moving on a rail or a form of having a self-running moving mechanism.

Further, the components 31 to 35 illustrated in the Figs. 3 and 4 are merely illustrative, and the present embodiments may be applied to various components.

## Claims

1. A robot system (1) comprising:
a component loading portion (30) where plurality of kinds of components (31-35) needed for assembling a product (36) are loaded;
a robot (20) configured to pick up the components (31-35) from the component loading portion (30) and assemble the picked-up components; and
a control apparatus (10) configured to control an operation of the robot (20),
wherein the control apparatus (10) comprises a first storage unit (121) configured to store information indicating a predetermined assembling sequence when the components (31-35) are assembled, and controls the operation of the robot (20) such that the robot (20) picks up the components (31-35) from the component loading portion (30) in order according to the assembling sequence and assembles the components (31-35), and
when the robot (20) fails to pick up the component according to the assembling sequence,
the control apparatus (10) controls the operation of the robot (20) such that the robot (20) first picks up a component having a high picking-up possibility and first assembles corresponding picked-up component according to the assembling sequence between the picked-up components, and
changes a picking-up condition and controls the operation of the robot (20) such that the robot (20) picks up the components before assembling based on the changed picking-up condition and assembles the components.

2. The robot system (1) according to claim 1, wherein the control apparatus (10) changes the picking-up condition by changing a lighting (70) configured to light the components (31-35).

3. The robot system (1) according to claim 1 or 2, wherein the control apparatus (10) changes the picking-up condition by changing an initial position of the robot (20) for picking up.

4. The robot system (1) according to one of claims 1-3, wherein the control apparatus (10) further comprises a second storage unit (122) configured to store information indicating whether each of the components (31-35) corresponds to a component enabling the assembling process to proceed to a next step, and
when the robot (20) fails to pick up the component according to the assembling sequence, the control apparatus (10) controls the operation of the robot (20) such that the robot (20) first picks up a component having a high picking-up possibility and enabling the assembling process to proceed to a next step.

5. The robot system (1) according to one of claims 1-4, wherein the control apparatus (10) additionally determines whether the assembling is completed, and
the control apparatus (10) compares an image of the component loading portion (30) before the components are loaded on the component loading portion (30) with an image of the component loading portion (30) picked up at a time point when the corresponding determination is performed, and determines that the assembling is completed when a coincidence degree of the two images is larger than or equal to a predetermined threshold value.

6. The robot system (1) according to one of claims 1-4, wherein the control apparatus (10) additionally determines whether the assembling is completed,
a predetermined mark is decorated at each of positions where the components are loaded on the component loading portion (30), and
the control apparatus (10) determines that the assembling is completed when the marks corresponding to each component are perceived to be more than or equal to a predetermined threshold value from an image of the component loading portion (30) picked up at a time point when the corresponding determination is performed.

7. The robot system (1) according to one of claims 1-4, wherein the control apparatus (10) additionally determines whether the assembling is completed,
a place of the component loading portion (30) where the components are loaded is formed in grid patterns, and
the control apparatus (10) determines that the assembling is completed when the grid patterns are perceived to be more than or equal to a predetermined threshold value from an image of the component loading portion (30) picked up at a time point when the corresponding determination is performed.

8. A method of manufacturing a work piece by using the robot system (1) defined in one of claims 1-7.

9. A control apparatus (10) for controlling an operation of a robot (20) for picking up components (31-35) from a component loading portion (30) where plurality of kinds of components (31-35) needed for assembling a product (36) are loaded and assembling the components (31-35),
wherein information indicating a predetermined assembling sequence when the components (31-35) are assembled is stored, and
the control apparatus (10) controls the operation of the robot (20) such that the robot (20) picks up the components (31-35) from the component loading portion (30) in order according to the assembling sequence and assembles the components (31-35), and
when the robot (20) fails to pick up the components according to the assembling sequence,
the control apparatus (10) controls the operation of the robot (20) such that the robot (20) first picks up a component having a high picking-up possibility and first assembles corresponding picked-up component according to the assembling sequence between the picked-up components, and
changes a picking-up condition and controls the operation of the robot (20) such that the robot (20) picks up the components before assembling based on the changed picking-up condition and assembles the components.
